# EUROPEAN PATENT SPECIFICATION

(11) **EP 1 314 333 B1**
(45) Date of publication and mention of the grant of the patent: **23.02.2005**
(21) Application number: 01963222.3
(22) Date of filing: 03.09.2001
(51) Int. Cl.: H04Q 11/00, G02F 2/00, H04Q 3/52, G02F 1/313

(54) **INTEGRATED OPTICAL ROUTER AND WAVELENGTH CONVERTOR MATRIX**
INTEGRIERTE OPTISCHEN WEGLENKUNGS- UND WELLENLÄNGENKONVERSIONSMATRIX
ROUTEUR OPTIQUE INTEGRE ET MATRICE DE CONVERSION DE LONGUEUR D'ONDE

(30) Priority: 01.09.2000 GB 0021512
(43) Date of publication of application: 28.05.2003
(73) Proprietor: University of Bristol, Bristol BS8 1TR (GB)
(72) Inventor: PENTY, Richard, Vincent, Litlington, Royston SG80QF (GB); YU, Siyuan, Stoke Bishop, Bristol BS9 1SZ (GB); WHITE, Ian, Cambridge CB1 1EZ (GB)
(74) Representative: Vigars, Christopher Ian
(86) International application number: PCT/GB2001/003952
(87) International publication number: WO 2002/019755

(56) References cited:
- EP-A- 0 310 184
- US-A- 5 367 584
- US-A- 5 581 643
- MA B ET AL: "ANALYSIS AND FABRICATION OF AN ALL-OPTICAL WAVELENGTH CONVERTER BASED ON DIRECTIONALLY-COUPLED SEMICONDUCTOR OPTICAL AMPLIFIERS" IEICE TRANSACTIONS ON ELECTRONICS, INSTITUTE OF ELECTRONICS INFORMATION AND COMM. ENG. TOKYO, JP, vol. E83-C, no. 2, February 2000 (2000-02), pages 248-254, XP000963665 ISSN: 0916-8524 cited in the application
- TZANAKAKI A ET AL: "ANALYSIS OF TUNABLE WAVELENGTH CONVERTERS BASED ON CROSS-GAIN MODULATION IN SEMICONDUCTOR OPTICAL AMPLIFIERS OPERATING IN THE COUNTER PROPAGATING MODE" IEE PROCEEDINGS: OPTOELECTRONICS, INSTITUTION OF ELECTRICAL ENGINEERS, STEVENAGE, GB, vol. 147, no. 1, February 2000 (2000-02), pages 49-55, XP000966276 ISSN: 1350-2433 cited in the application
- WOLFSON D ET AL: "40-Gb/s all-optical wavelength conversion, regeneration, and demultiplexing in an SOA-based all-active Mach-Zehnder interferometer" IEEE PHOTONICS TECHNOLOGY LETTERS, MARCH 2000, IEEE, USA, vol. 12, no. 3, pages 332-334, XP002193084 ISSN: 1041-1135

## Description

The present invention relates to integrated optical routers and wavelength converters.

### Background of the Invention:

The capability for transferring data modulating an optical carrier onto another optical carrier with a different wavelength by optical means (wavelength conversion) is important in wavelength division multiplexing (WDM). With the emergence of both wavelength-switching and packet-switching based highly dynamic optical networks, it is desirable to have efficient switching devices that are capable of both routing fast optical data packets to different directions in space and converting the wavelength of the data packets. Due to the large scale and high complexity of these networks, it is desirable to combine the two functions in one router/wavelength converter component, and to produce an monolithic photonic device that integrate large number of such router/wavelength converter components.

One prior art wavelength conversion approach is described in the paper 'Analysis of tunable wavelength converters based on cross-gain modulation in semiconductor optical amplifiers operating in the counter propagating mode', Tzanakaki and O'Mahony, IEE Proceedings: Optoelectronics, 2000, Vol.147, No.1, pp.49-55. In this scheme a semiconductor optical amplifiers (SOA) is used. The optical data carried by one light beam saturates the SOA, causing the intensity of another continuous wave (CW) light beam with a different wavelength that also passes the SOA to change accordingly, therefore transfers the data on to the other light beam.

Another prior art approach for wavelength conversion is described in 'Analysis and fabrication of an all-optical wavelength converter based on directionally-coupled semiconductor optical amplifiers', Ma, Saitoh, Nakano, IEICE Transactions on Electronics, 2000, Vol.v E83-C, No.2, pp.248-254. In this scheme the SOA is modified to have two laterally coupled waveguides fabricated in the same plane on a semiconductor substrate. Better performance may be expected than the single waveguide SOA device.

Another prior art approach for wavelength conversion is described in '40-Gb/s all-optical wavelength conversion, regeneration, and demultiplexing in an SOA-based all-active Mach-Zehnder interferometer', Wolfson, Kloch, Fjelde, Janz, Dagens, Renaud, IEEE Photonics Technology Letters, 2000, Vol.12, No.3, pp.332-334. In a interferometric arrangement, data carried by a light beam changes the phase of another CW light beam that passes through the SOA by cross phase modulation in the SOA. The interferometer converts the phase change into intensity change.

Previously-considered approaches to optical routing are described in paper WdD.04 by F. Dorgeuille et al., at ECOC'98, Madrid, 1998, where SOA arrays are used as optical gates.

US 5581643 discloses an optical waveguide cross-point switch capable of full broadcast and non blocking operation. This device has a matrix of a plurality of input waveguides and a plurality of output waveguides. A reflecting surface associated with each intersection may be selectively activated to direct an optical signal on the input line to the associated output line.

### Summary of the Invention:

Particular embodiments of the present invention can provide:
1. An optical component that is controlled by an external signal. When the controlling signal is present, the component allows a first input light beam to leave the component by way of a first chosen direction. When the controlling signal is absent, the component allows the same light beam to leave the component by way of a second chosen direction. The component may be known as an optical router, an optical space switch, or an optical crosspoint switch.
2. A component that, while allowing the first input light beam to travel to one of the chosen directions, imparts data carried by the first input light beam on to a second light beam having a wavelength that is different from the first input light beam. This data transfer process is known as wavelength conversion. A component in which wavelength conversion happens is known as a wavelength converter.
3. A component that, while allowing a first input light beam to travel to one of the chosen directions, imparts data carried by a second input light beam on to the first light beam that has a wavelength that is different from the second input light beam.
4. A component that, with the presence of a first light beam, allows data carried by a second light beam having a wavelength that is different from the first light beam to be imparted onto a third light beam and allows the third light beam to leave the component by way of a chosen direction. The third light beam has a wavelength that is different from both the first and the second light beams.
5. An optical device consisting of a plurality of such components integrated on a single substrate.

Other objectives and advantages of the invention will become apparent from the detailed description that follows. The detailed description and specific embodiments are provided only for illustration purposes. Various additions and modifications within the scope of the invention will be apparent to those skilled in the art.

An embodiment of a first aspect of the present invention provides a first semiconductor layer comprising: an appropriate crystal composition disposed on a semiconductor substrate, a second semiconductor layer having a crystal composition different from the first semiconductor layer disposed on the first semiconductor layer, so that a first lower optical slab waveguide is formed with the first semiconductor layer as its core, a third semiconductor layer having a crystal composition different from the second semiconductor layer disposed on the second semiconductor layer, a fourth semiconductor layer having a crystal composition different from the third semiconductor layer disposed on the third semiconductor layer to form a second upper optical slab waveguide with the third semiconductor layer as its core. A structure known as a vertical optical coupler is therefore constructed by the presence of the first and the second optical slab waveguides on the same semiconductor substrate.

In an embodiment of a second aspect of the present invention, first and second groups of parallel optical ridge waveguides are formed on the semiconductor substrate. The two groups of ridge waveguides intersect each other.

In an embodiment of a third aspect of the present invention, a plurality of deflecting surfaces normal to the semiconductor layer plane are formed at each intersection between the first group of optical ridge waveguides and the second group of optical ridge waveguides. The depth and orientation of these surfaces are arranged such that each of these surfaces deflects most or all optical power travelling in the upper optical slab waveguide (the third semiconductor layer) in a first ridge waveguide into the same second optical slab waveguide in a second ridge waveguide.

In an embodiment of a fourth aspect of the invention, input light beams are launched into the lower optical slab waveguide (or the first semiconductor layer) in one or more ridge waveguides.

In an embodiment of a fifth aspect of the present invention, the optical properties including refractive index and optical absorption or gain of one or both slab waveguides are influenced by external signals that are applied to the vertical optical coupler structure. Therefore the optical coupling between the lower and the upper slab waveguides is controlled by said external signal. The intensity of light beams may also be changed by the said control signals due to changes in absorption or gain. As a result, when an external control signal enables strong optical coupling, the input light beams propagating in the lower optical slab waveguide of a first ridge waveguide couple into the upper slab waveguide. The input light beams that are coupled into the upper waveguide may be deflected by the reflecting surfaces into a second ridge waveguide and couple into the lower slab waveguide in the second ridge waveguide. The input light beams are therefore routed to a chosen direction. Where and when an external control signal allows only weak optical coupling, the input light beams propagating in the lower optical slab waveguide of a first ridge waveguide essentially remain in the lower slab waveguide and propagate in its original direction.

In an embodiment of a sixth aspect of the present invention, at a given external control signal amplitude, the optical properties including refractive index and optical absorption or gain of one or both slab waveguides are changed by the intensity of light in one or both slab waveguides. Therefore the optical coupling between the lower and the upper slab waveguides in a ridge waveguide is changed by the light intensity in the ridge waveguide. The magnitude of light is also changed by the changes in optical loss or gain of the ridge waveguides. As a result when more than one light beam are present in the same ridge waveguide, the data modulating one of the light beam that is routed into the chosen direction may be imparted onto other beams having different wavelengths that are present or generated in the ridge waveguide. The process of wavelength conversion is therefore implemented.

### Brief Description of Drawings

Fig.1 is an illustration of a semiconductor substrate with a vertical optical coupler layer structure.
Fig.2 is a plan view of an optical router/wavelength converter matrix formed on the substrate of Fig. 1.
Figs.3 (a)-(g) illustrate a preferred process for fabricating an optical router/wavelength converter matrix integrating a plurality of optical router /wavelength converter components.
Figs.4 (a) and (b) illustrate an optical router /wavelength converter component routing an input light beam to two different output ports.
Fig.5 illustrates a preferred embodiment where free carriers are injected into and confined in the core layer of the upper slab waveguide by means of an electric current and a p-i-n double hetero-junction structure.
Fig.6 illustrates another preferred embodiment where an electric field can be applied across the upper waveguide core layer by forming a p-i-n junction.
Fig.7 illustrates a first wavelength conversion mode in the present invention where data-carrying and CW light beams travel the same route through the device but in opposite directions (counter-propagation).
Fig.8 illustrates a second wavelength conversion mode in the present invention where data-carrying and CW light beams travel the same route through the device in the same direction (co-propagation).
Fig.9 illustrates a third wavelength conversion mode in the present invention where a data-carrying light beam enters the component from a port that is different from the part through which the CW light beam enters the component.
Fig.10 illustrates a fourth wavelength conversion mode where a data-carrying light beam enters the component from another port that is different from that of the CW light beam.

### Detailed description of the preferred embodiments

The preferred embodiments and their modes of operation described hereafter are given as examples and are demonstrations of the operating principles and main advantages of the present invention. Other embodiments, advantages and operational modes of the present invention can be inferred from the descriptions given in this patent and be obvious to those skilled in the art.

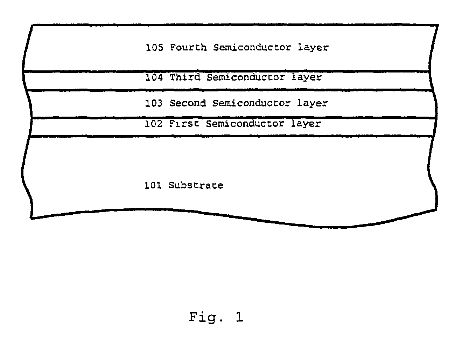

Fig.1 illustrates a semiconductor wafer layer structure that can be used to fabricate an optical router /wavelength converter device. Successive semiconductor layers (102)-(105) are disposed on a semiconductor substrate (101). The layer structure is designed such that optimised optical coupling is achieved at a chosen state of a control signal, and the design will vary according to the control and wavelength conversion mechanisms used. The layers are separated for illustration of optical guiding functionality. Each layer may be provided by a group of layers that may be necessary for other electronic and optical purposes. For example, the slab waveguide core layers (102) and (104) may contain multiple quantum well structures.

### A first embodiment of the present invention will now be described.

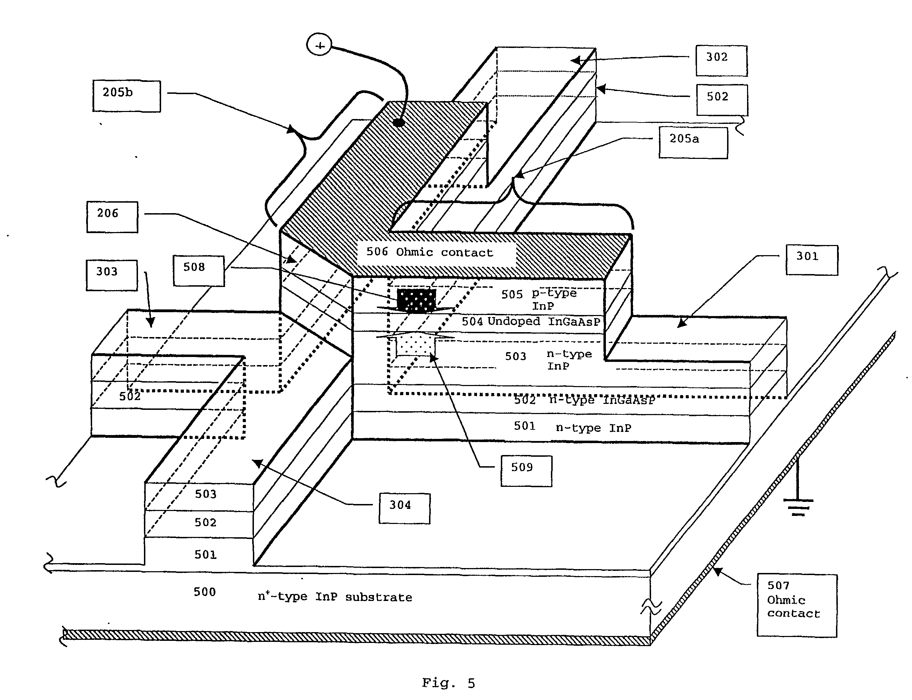

A semiconductor wafer is prepared as shown in Fig.5. An n-type InP buffer layer (501) is first disposed on a n+ InP substrate. An n-type InGaAsP layer (502) of appropriate bandgap energy, another InP layer (503), another undoped InGaAsP layer (504), and a third InP layer that is p-type doped are disposed successively on the buffer layer (501). Further layers may be necessary for contact purposes. Layer (502) acts as the core layer of an optically passive lower slab waveguide (102), and has a bandgap energy that is larger than an input light beam photon energy. The undoped InGaAsP layer (504) acts as an optically active upper slab waveguide core layer (104). The semiconductor layers are doped so that a p-i-n double hetero-junction structure is formed around the upper slab waveguide core layer.

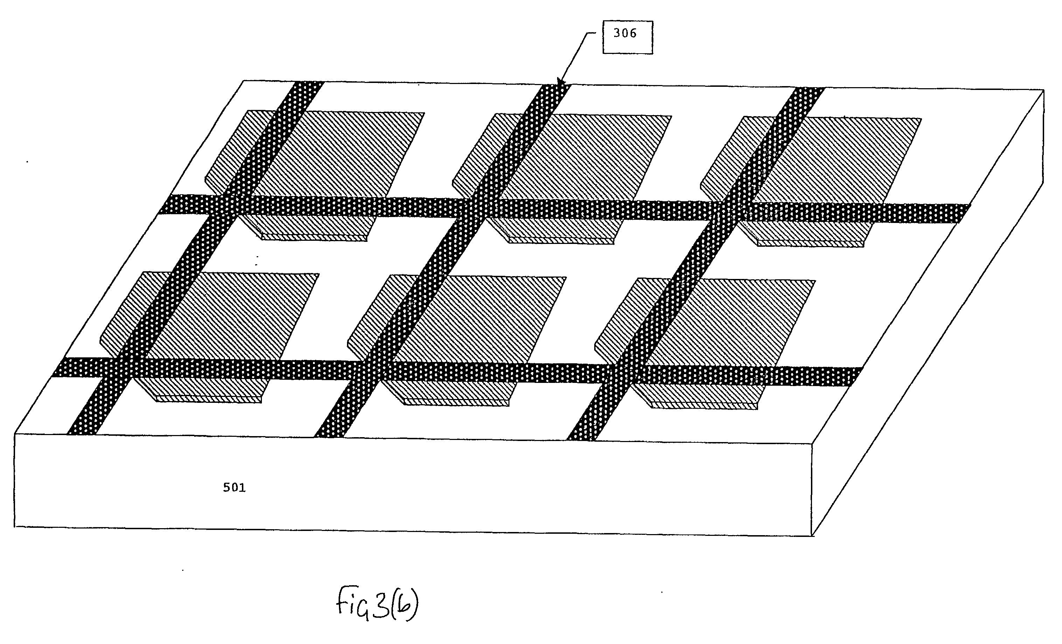

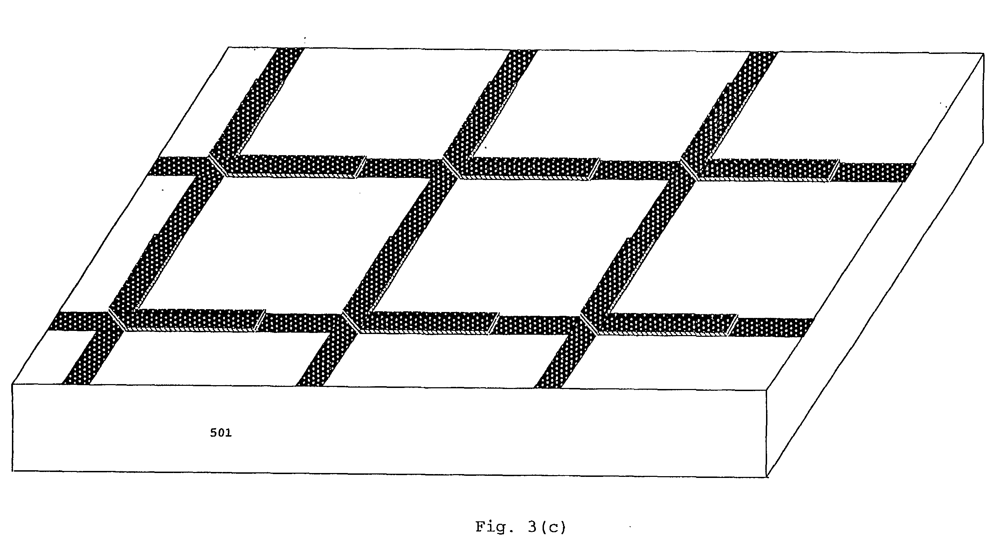

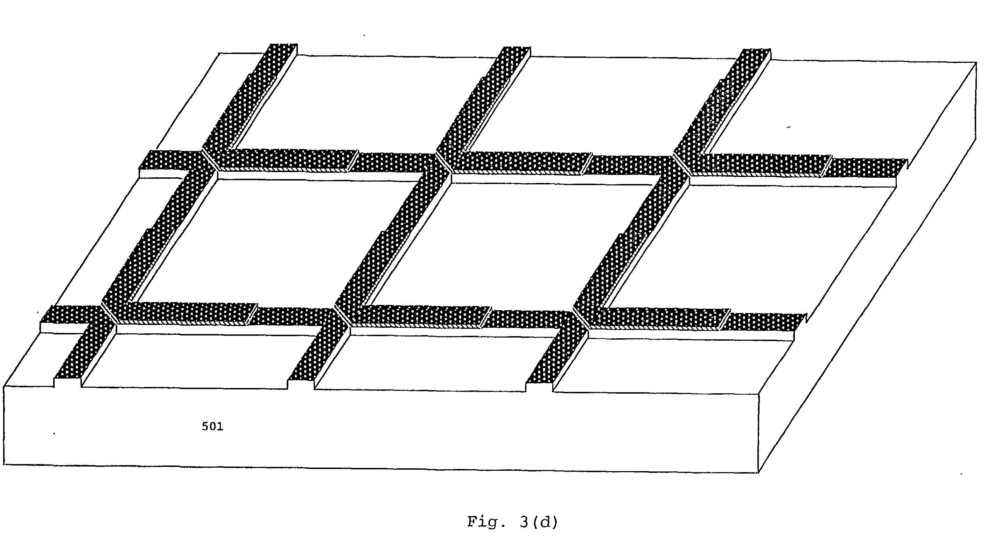

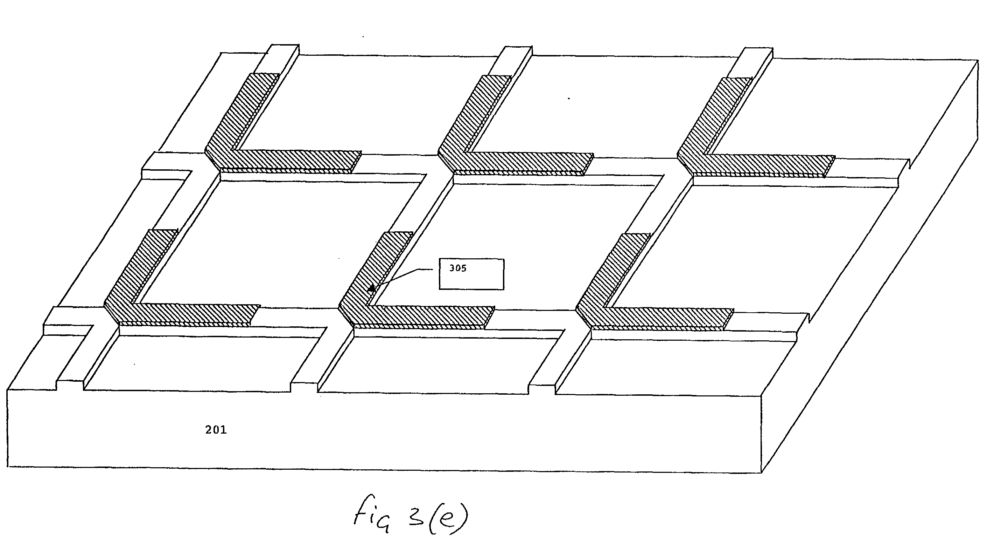

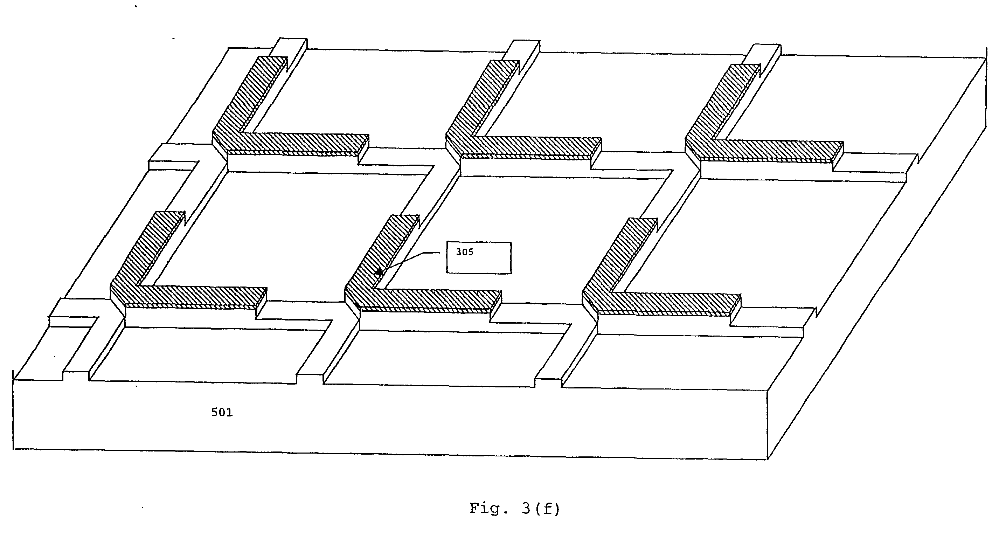

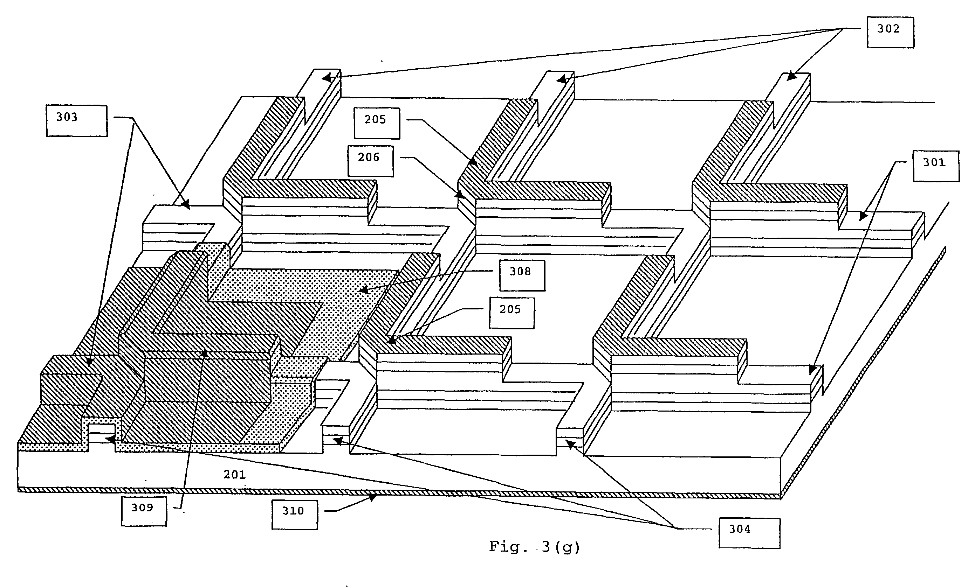

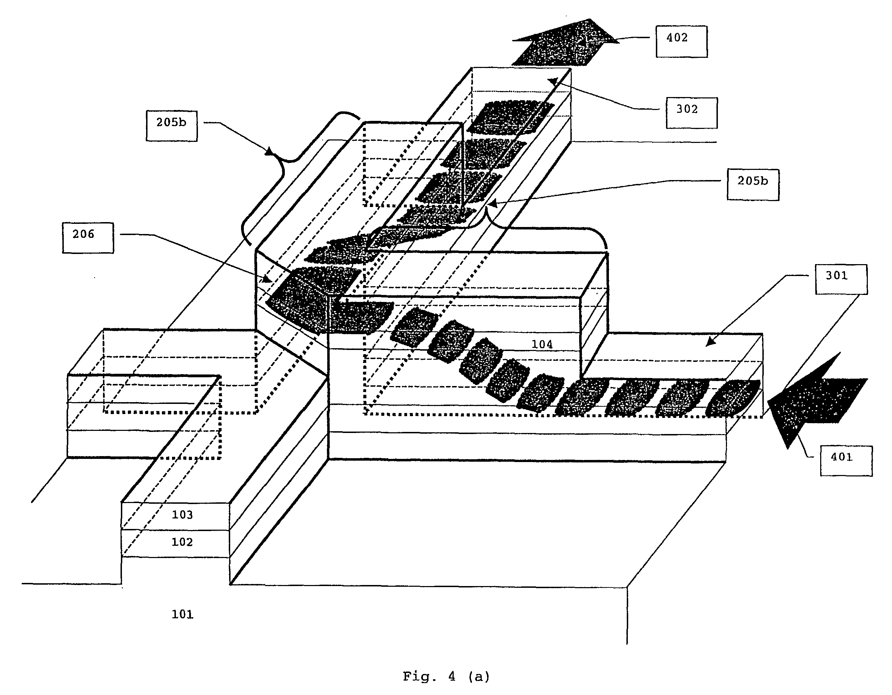

A preferred method of fabricating the preferred embodiment is described below. Corresponding illustrations are presented in Fig.3 (a), (b), (c), (d), (e), (f) and (g).

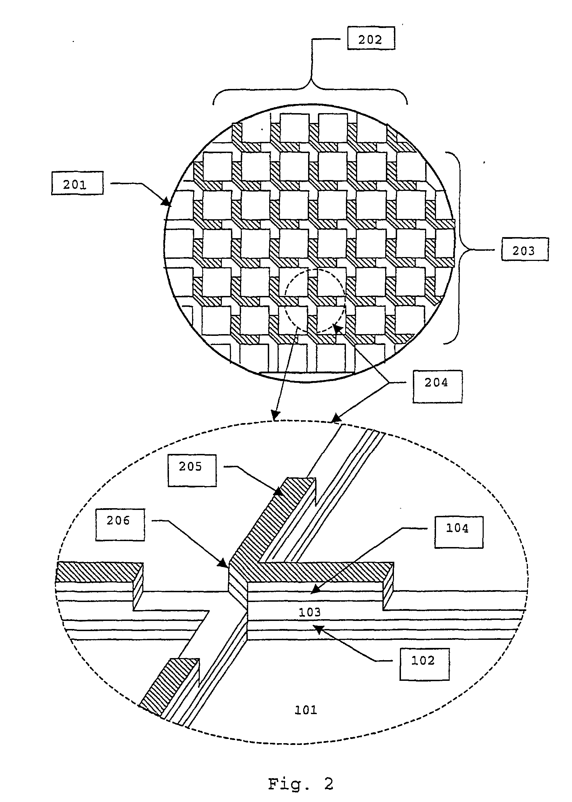

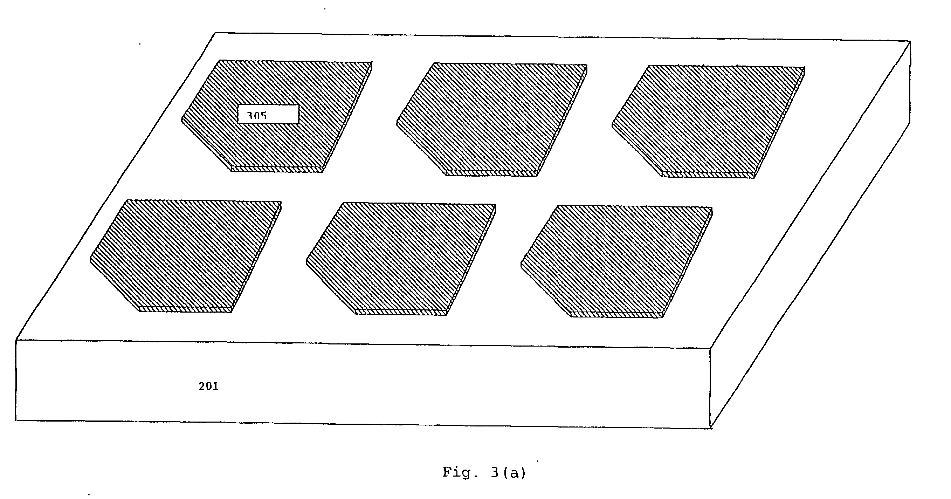

Two groups of ridge waveguides (202) and (203) are to be formed as shown in Fig.2. Both groups consist of vertical coupler sections and passive waveguide sections, where the upper slab waveguide layer is removed. The vertical couplers are connected to each other at the intersection between two ridge waveguides where a vertical deflecting surface relates both ridge waveguides optically.

To form the ridge waveguide structures, a first mask material (305) is disposed on the wafer (201). This first mask material is patterned by a photolithography process followed by a dry etching process. The patterned first mask material is shown in Fig.3(a).

A second mask material (306) is subsequently disposed on the wafer (201) and patterned by a second photolithography process. The second mask is aligned to the first mask material as shown in Fig.3(b). The first mask material is then etched again using the second mask material as etch mask. A self aligned, two layer mask is thus formed on the wafer, as illustrated in Fig.3(c).

The ridge waveguides are formed by a two step etching process.

In the first etching step, the semiconductor wafer material (201) is etched to a suitable depth from the areas that are not covered by either mask materials, as shown in Fig.3(d). The second mask material (306) is then removed by a selective etch process that does not etch both the first mask material and the wafer material. The resulting structure is illustrated in Fig.3(e).

The light deflecting surface (206) and the vertical coupler section (205) are formed by a second etching step. In this second step the semiconductor is etched to a depth that is between the two slab waveguide core layers (102) and (104), resulting in the structure shown in Fig.3(f). The etching process should produce a light deflecting surface (206) that is smooth and vertical to the substrate plane. The first mask material (305) is subsequently removed from the wafer.

As shown in Fig.3(g), the ridge waveguides are then buried in a suitable insulating material (308) that is disposed on to the wafer and that serves to improve the insulation between the ridge waveguides and the surroundings. A third photolithography step is used to pattern this insulating material, so that the top surfaces of the vertical coupler section (205) are exposed by removing the insulating material from the same area. An ohmic contact (309)/(506) is formed by disposing suitable metal layers on the exposed p-type semiconductor surface. A second ohmic contact (310)/(507) is formed on the opposite (n+-type) side of the substrate.

An integrated device as illustrated in Fig.3(g) is produced by cleaving the processed wafer (201) into devices containing chosen number of components, with four groups of optical ports (301), (302), (303), and (304).

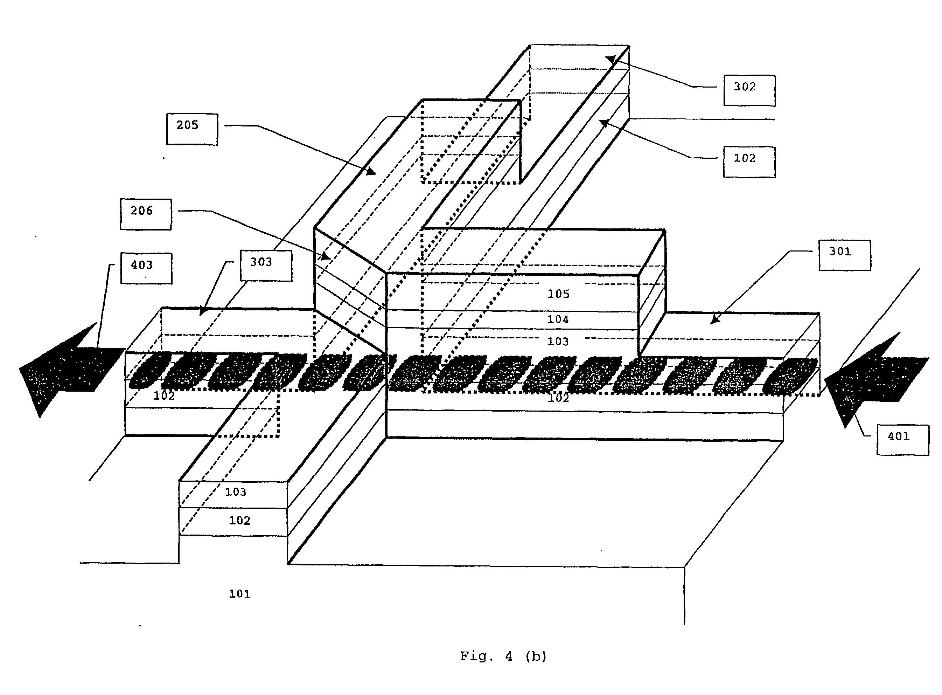

A description of the operational principle of the first preferred embodiment is given below. Related illustrations are presented in Fig.4, Fig.5, Fig.7, Fig.8, Fig.9 and Fig.10.

As illustrated in Fig.4(b), the semiconductor layer structure is designed so that when no electric voltage is applied between the two ohmic contacts, the optical coupling between the lower slab waveguide core layer (102) and the upper slab waveguide core layer (104) is weak. Therefore a input light beam (401) entering the lower slab waveguide via port (301) will travel within the confines of the lower slab waveguide and will leave the router/wavelength converter component via port (303). The ridge waveguide of port (303) leads either to the next the component in a integrated device matrix, or to the edge of the integrated device where the light beam leaves the device.

As illustrated in Fig.4(a), when a positive voltage is applied to the p-side ohmic contact (506), an electric current flows from the p-side ohmic contact (506) to the n-side ohmic contact (507). The positive voltage causes a flow of holes (508) from the p-type InP layer (505) and a second flow of electrons (509) from the n-type InP layer (503) into the un-doped InGaAsP layer (504). The electrons and holes are confined in the un-doped InGaAsP layer (504) because of the smaller bandgap energy of un-doped InGaAsP layer (504) compared to that of the surrounding layers (503) and (506). The un-doped InGaAsP layer (504) changes from having a high optical absorption to having an optical gain because of the presence of electron and hole population. The refractive index of the un-doped InGaAsP layer (504) also changes because of the presence of electron and hole population.

The semiconductor layer parameters are so designed that at a certain carrier population, the optical coupling between the lower slab waveguide core layer (502)/(102) and the upper slab waveguide core layer (504)/(104) becomes strong in the vertical coupler section due to the changed refractive index in the upper slab core layer (504). This strong optical coupling results from the refractive index change in the upper slab waveguide core layer (504) that causes the propagation constants of both slab waveguides to become very close or equal. A significant optical power transfer happens between the said layers. The length of the vertical coupler section (205) is so designed that maximum optical power transfer happens over the two parts of the vertical coupler section (205a) and (205b) on either side of the deflecting surface (206).

As a result, under the influence of the positive voltage that is applied between the p-side ohmic contact (506) and the n-side ohmic contact (507), the routing process illustrated in Fig.4(a) happens in the router/wavelength converter component. A light beam (401) entering port (301) is mostly coupled from the lower slab waveguide (102) to the upper slab waveguide (104) in the first section of the vertical coupler, deflected by the vertical surface (206) into the second section of the vertical coupler (205), and routed to port (302) by coupling from the upper slab waveguide (104) to the lower slab waveguide (102). Because of the optical gain that exists in the upper slab waveguide core (504)/(104), when the wavelength of the light beam is within the optical gain bandwidth, the intensity of the beam can also be amplified while it is routed.

The ridge waveguide of port (302) leads either to the next the component in a integrated device matrix, or to the edge of the integrated device where the light beam leaves the device.

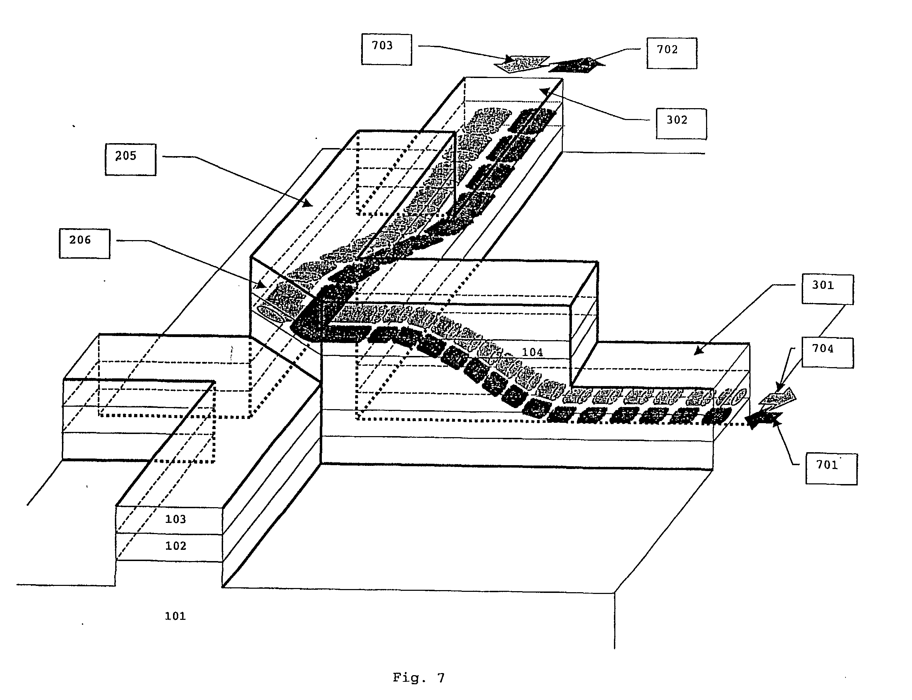

A first wavelength conversion mode (counter-propagation) in the first particular embodiment of the present invention is illustrated in Fig.7.

A first light beam (701) whose intensity is modulated by a data signal enters the router/wavelength converter component via port (301). The component that is the first preferred embodiment of the present invention is applied with a positive voltage between the p-side and n-side ohmic contacts (506) and (507). The resulting carrier population injected in the upper slab waveguide core layer (504) causes a change in refractive index and an optical gain. According to above descriptions, the component routes the first light beam (701) to port (302) and exit as output beam (702).

A second light beam that has a wavelength different from the first light beam and that is constant in intensity enters the component by way of port (302). According to the same principles described above, the second light beam travels exactly the same route as the first light beam but in the opposite direction, and exit the component via port (301) as output beam (704).

When the wavelength of both light beam are within the optical gain bandwidth of the upper slab waveguide layer (504)/(104), as both light beams travel in the upper slab waveguide core layer (504)/(104), the carrier density in layer (504) changes because of the consumption of carriers through stimulated emission involved in the optical amplification process. Because the intensity of the first light beam is modulated by the data, the carrier density will also be modulated by the data signal.

This variation of carrier density results in varying optical gain and refractive index in layer (504).

Therefore the intensity of the output beam (704) can be changed by two mechanisms.

The first mechanism, by which the intensity of the output beam (704) is modulated by the data carried on the first input light beam (701), is referred as cross-gain modulation. When the intensity of the first light beam (701) is high, more carriers are consumed by stimulated emission. The reduced carrier population results in reduced amplification of the second input light beam. The output light beam (704) will consequently have a lower intensity. On the contrary, when the intensity of the first input beam (701) is low, less carriers are consumed by stimulated emission. The higher carrier population corresponds to higher optical gain and more amplification of the second input light beam. Therefore the output light beam (704) will consequently have a higher intensity. The data modulating the first input light beam (701) is therefore transferred to the second output beam (704) with reversed polarity.

The second mechanism, by which the intensity of the output beam (704) is modulated by the data carried on the first input light beam (701), is the refractive index change caused by the carrier population variation. As described above, the strength of optical coupling between the upper and lower slab waveguide layers in the vertical coupler depends on the propagation constants of both slab waveguides being equal or very close. In the first preferred embodiment this condition is reached at a certain injected carrier density level set by a suitable positive bias voltage so that the second input beam (702) is routed to port (301) and exit as output beam (704). When the carrier population is reduced due to the high intensity of the first input beam (701), the strong coupling condition is removed, and the intensity of the output beam (704) is reduced.

It is obvious from the above description that the two mechanisms are both present and are not separable in the first preferred embodiment of the present invention. The two mechanisms are constructively superimposed. As a result, in the present invention, enhanced wavelength conversion performance is expected over prior arts where only one of the mechanisms (either cross gain modulation or refractive index change/cross phase modulation) are employed.

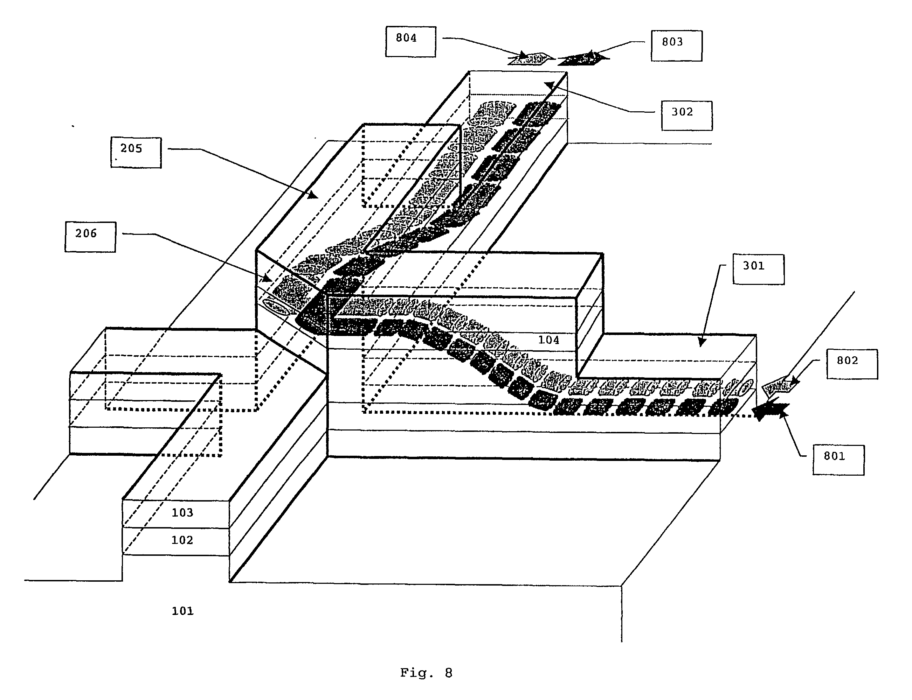

A second wavelength conversion mode (co-propagation) in the first particular embodiment of the present invention is illustrated in Fig.8.

A first light beam (801) whose intensity is modulated by a data signal enters the router/wavelength converter component via port (301). The component that is the first preferred embodiment of the present invention is applied with a positive voltage between the p-side and n-side ohmic contacts (506) and (507). The resulting carrier population injected in the upper slab waveguide core layer (504) causes a change in refractive index and an optical gain. According to the above description, the component routes the first light beam (801) to port (302) to exit as output beam (803).

A second light beam (802) that has a wavelength different from the first light beam and that is constant in intensity enters the component also by way of port (301). According to the same principles described above, the second light beam travels exactly the same route as the first light beam, and exits the component via port (302) as output beam (804).

Wavelength conversion happens in the whole length of the vertical coupler section by the same principles and mechanisms that are present in the first wavelength conversion mode.

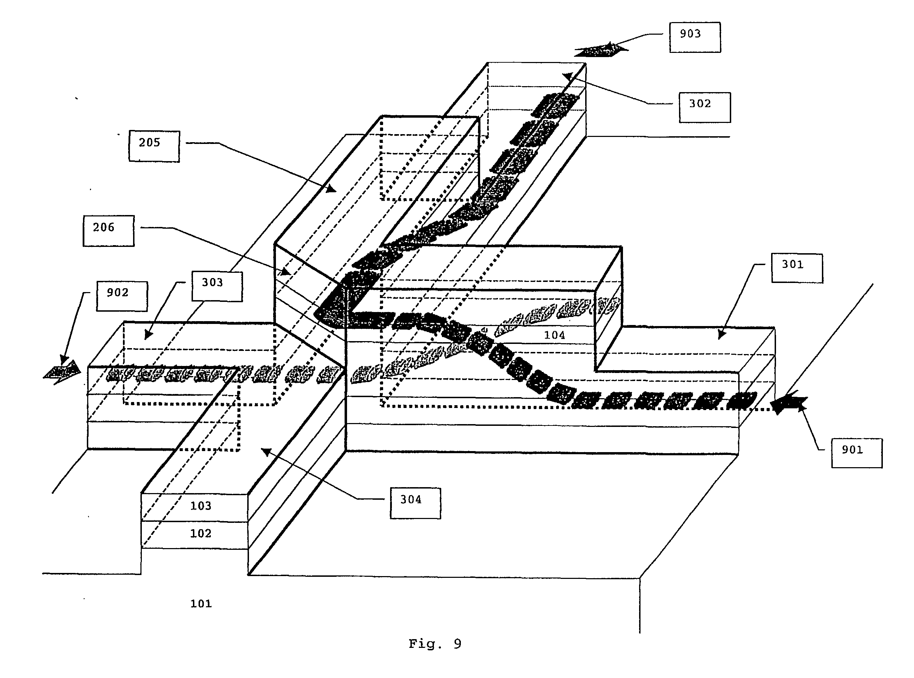

A third wavelength conversion mode in the first particular embodiment of the present invention is illustrated in Fig.9.

A first light beam (901) whose intensity is constant enters the router/wavelength converter component via port (301). The component that is the first preferred embodiment of the present invention is applied with a positive voltage between the p-side and n-side ohmic contacts (506) and (507). The resulting carrier population injected in the upper slab waveguide core layer (504) causes a change in refractive index and an optical gain. According to the above description, the component routes the first light beam (901) to port (302) to exit as output beam (903).

A second light beam (902) that has a wavelength different from the first light beam and whose intensity is modulated by a data signal enters the component by way of port (303). According to the same principles described above, the second light beam travels in the lower slab waveguide layer (102)/(502) towards port (301), and mostly couples into the upper slab waveguide in the first half of the vertical coupler section (204a).

Wavelength conversion happens in the first half of the vertical coupler section (205a) by the same principles and mechanisms that are present in the first wavelength conversion mode.

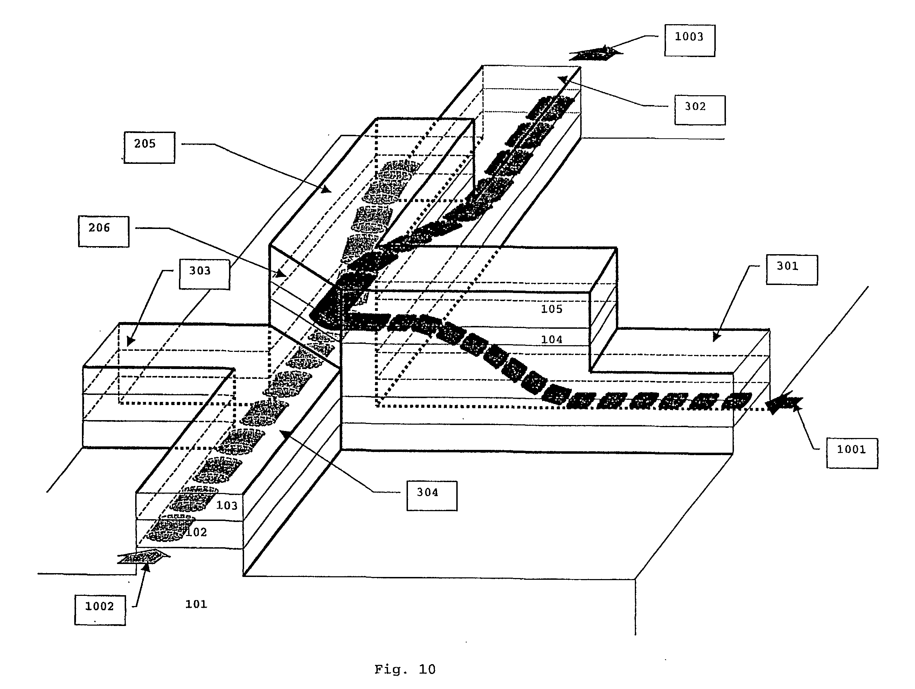

A fourth wavelength conversion mode in the first preferred embodiment of the present invention is illustrated in Fig.10.

A first light beam (1001) whose intensity is constant enters the router/wavelength converter component via port (301). The component that is the first preferred embodiment of the present invention is applied with a positive voltage between the p-side and n-side ohmic contacts (506) and (507). The resulting carrier population injected in the upper slab waveguide core layer (504) causes a change in refractive index and an optical gain. According to above descriptions, the component routes the first light beam (1001) to port (302) and exit as output beam (1003).

A second light beam (1002) that has a wavelength different from the first light beam and whose intensity is modulated by a data signal enters the component by way of port (304). According to the same principles described above, the second light beam travels in the lower slab waveguide layer (102)/(502) towards port (302), and mostly couples into the upper slab waveguide layer (104)/(504) in the second half of the vertical coupler section (205b).

Wavelength conversion happens in the second half of the vertical coupler section (205b) by the same principles and mechanisms that are present in the first wavelength conversion mode.

A fifth wavelength conversion mode in the first preferred embodiment of the present invention involves a process known as four wave mixing. A first light beam the has a intensity modulated by a data signal interact with a second light beam that has a constant intensity and a wavelength different from the first light beam.

As a result a third light beam is generated in the component. This third light beam has a wavelength that is different from both the first and the second light beam. The intensity of the third light beam is modulated by the data signal that is carried by the first light beam.

By using current injection induced gain and refractive index as the control mechanism for routing, the first embodiment of the present invention has the advantage of providing:
1. Fast switching speed in nanosecond range.
2. Enhanced wavelength conversion by a combination of cross gain and refractive index (coupling) modulation.
3. Wavelength conversion by means of four wave mixing.
4. Optical gain for data being routed and wavelength converted.
5. Possibility of large scale integration due to the use of passive waveguides as interconnection between router/wavelength converter components.
6. Possibility of large scale integration also due to the use of non-splitting architecture. In the present invention the input light beam can be routed/wavelength converted in whole at a chosen component without being split into many parts. Better signal to noise ratio can be achieved in such an architecture.

A second preferred embodiment is described below.

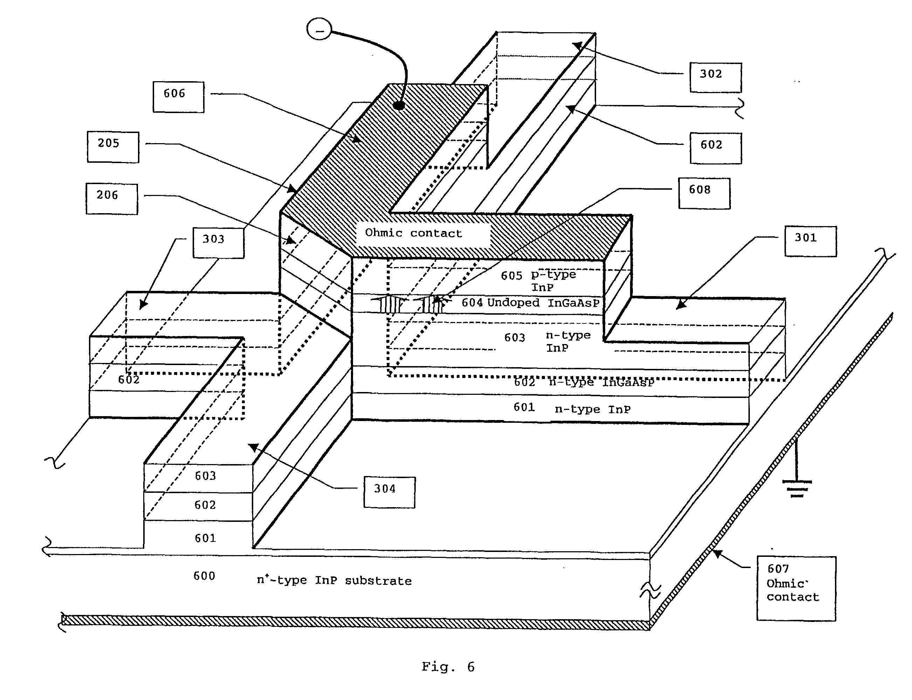

A semiconductor wafer is prepared according to Fig.6. An n-type InP buffer layer (601) is first disposed on a n+ InP substrate (600). An n-type InGaAsP layer (602) of appropriate bandgap energy, another InP layer (603), an undoped InGaAsP layer (604), and a third InP layer that is p-type doped are disposed successively on the buffer layer (601). Further layers may be necessary for contact purposes. Layer (602) acts as the core layer of the optically passive lower slab waveguide (102), and has a bandgap energy that is larger than the input light beam photon energy. Layer (604) acts as the optically active upper slab waveguide core layer (104). The semiconductor layers are doped so that a p-i-n double hetero-junction structure is formed around the upper slab waveguide core layer.

The second preferred embodiment can be fabricated by the same preferred method that is given for the first preferred embodiment. Corresponding illustrations are presented in Fig.3 (a), (b), (c), (d), (e), (f) and (g).

A description of the operational principle of the second preferred embodiment is given below. Related illustrations are presented in Fig.4, Fig.6, Fig.7, and Fig.8.

The semiconductor layer parameters are so designed that when an electric field is absent, the optical coupling between the lower slab waveguide core layer (602)/(102) and the upper slab waveguide core layer (604)/(104) is strong in the vertical coupler. This strong optical coupling results from the fact that the propagation constants of both slab waveguides are very close or equal. A significant optical power transfer happens between the said layers. The length of the vertical coupler section (205) is so designed that maximum optical power transfer happens over the two parts of the vertical coupler section (205a) and (205b) on either side of the deflecting surface (206). The upper slab waveguide core layer (604) is also low absorption at the absence of the electric field because its bandgap energy is larger than the photon energy of the external light beam.

As a result, without the influence of the voltage that is applied between the p-side ohmic contact (606) and the n-side ohmic contact (607), the routing process illustrated in Fig.4(a) happens in the router/wavelength converter component. A light beam (401) entering port (301) is mostly coupled from the lower slab waveguide (102) to the upper slab waveguide (104) in the first section of the vertical coupler (205a), deflected by the vertical surface (206) into the second section of the vertical coupler (205b), and routed to port (302) by coupling from the upper slab waveguide (104) to the lower slab waveguide (102). The ridge waveguide of port (302) leads either to the next component in a integrated device matrix, or to the edge of the integrated device where the light beam leaves the device.

As illustrated in Fig.4(b) and Fig.6, the semiconductor layer structure is designed so that when an negative electric voltage is applied between the p-side and the n+-side ohmic contacts, an electric field is applied across the upper slab waveguide layer (604). This electrical field shifts the bandgap of layer (604) so that it has a high optical absorption and a higher refractive index at the light signal wavelength, and the optical coupling between the lower slab waveguide core layer (102) and the upper slab waveguide core layer (104) is weak. Therefore a input light beam (401) entering the lower slab waveguide via port (301) will mostly remain travelling in the lower slab waveguide and leave the router/wavelength converter component via port (303). The ridge waveguide of port (303) leads either to the next component in a integrated device matrix, or to the edge of the integrated device where the light beam leaves the device.

A first wavelength conversion mode (counter-propagation) in the second particular embodiment of the present invention is illustrated in Fig.7.

A first light beam (701) whose intensity is constant enters the router/wavelength converter component via port (301). The component that is the second preferred embodiment of the present invention is applied with a negative voltage between the p-side and n-side ohmic contacts (606) and (607). According to above descriptions, the component routes the first light beam (701) to port (303).

A second light beam (703) that has a wavelength different from the first light beam and that is intensity modulated by a data signal enters the component by way of port (302). According to the same principles described above, the second light beam mostly remains in the lower slab waveguide and exits the component via port (304).

However, when the intensity of the second light beam is sufficiently high, the part of its energy that is absorbed by the upper waveguide core (604) through residual optical coupling starts to saturate the absorbing layer (604). As a result the effective bandgap of layer (604) is widened, so that its refractive index reduces, resulting in increasing optical coupling between the two waveguide layers. This in turn increases the optical power of second light beam that is coupled into layer (604) and absorbed. A positive feedback cycle is therefore established until the increasing optical coupling into layer (604) and decreasing absorption in layer (604) reaches a balance. At this point the stronger optical coupling and reduced absorption in layer (604) enables the first light beam to be routed to port (302) and exits as output beam (702). Because this output is only present when beam (703) is at high intensity, the data carried by input beam (703) is successfully transferred to output beam (702).

A second wavelength conversion mode (co-propagation) in the second particular embodiment of the present invention is illustrated in Fig.8.

A first light beam (801) whose intensity is constant enters the router/wavelength converter component via port (301). The component that is the second preferred embodiment of the present invention is applied with a negative voltage between the p-side and n-side ohmic contacts (606) and (607). According to above descriptions, the component routes the first light beam (801) to port (303).

A second light beam (802) that has a wavelength different from the first light beam and that is intensity modulated by a data signal also enters the component by way of port (301). According to the same principles described above, the second light beam mostly remains in the lower slab waveguide and exits the component via port (303).

However, when the intensity of the second light beam (802) is sufficiently high, the part of its energy that is absorbed by the upper waveguide core (604) through residual optical coupling starts to saturate the absorbing layer (604). As a result the effective bandgap of layer (604) is widened, so that its refractive index reduces, resulting in increasing optical coupling between the two waveguide layers. This in turn increases the optical power of second light beam (802) that is coupled into layer (604) and absorbed. A positive feedback cycle is therefore established until the increasing optical coupling into layer (604) and decreasing absorption in layer (604) reaches a balance. At this point the stronger optical coupling and reduced absorption in layer (604) enables the first light beam (801) to be routed to port (302) and exits as output beam (803). Because this output is only present when beam (802) is at high intensity, the data carried by input beam (802) is successfully transferred to output beam (803).

By using electric field induced bandgap change as the control mechanism for routing, the second embodiment of the present invention has the advantage of providing:
1. Very Fast switching speed in the sub-nanosecond range.
2. Enhanced wavelength conversion by a positive feedback of absorption and refractive index (coupling) modulation.
3. Possibility of large scale integration due to the use of passive waveguides as interconnection between router/wavelength converter components.
4. Possibility of large scale integration also due to the use of non-splitting architecture.

It will be appreciated that an embodiment of the present invention provides an optical component that uses optically active vertical couplers to enable optical signals to be routed and wavelength converted at the same time.

An optical device can include a plurality of such components, that are optically connected and integrated on a single substrate, and that extend on the substrate to form a matrix of the optical component.

An optical device can include a plurality of such components that are connected to each other by means of other optical waveguides that are not part of the same substrate or wafer.

The component comprises two or more slab waveguide layers that are stacked vertically, and that are optically coupled to each other. One or more of the layers are optically active that can amplify or absorb external light signals that are to be routed and/or wavelength converted. Two ridge waveguides are fabricated in above slab waveguide layers, and that intersect each other.

A deflecting surface at the intersection deflects light from one ridge waveguide into the other ridge waveguide.

Such an optical component can have two optically coupled slab waveguides. A light amplifying upper waveguide core layer and a low absorption optically passive lower slab waveguide core layer can be provided.

Such an optical component may use a bulk semiconductor layer as the light amplifying layer and may use electric current injection to control the optical amplification.

Alternatively, such an optical component may use a single or multiple quantum well structure as the light amplifying layer and may use electric current injection to control the optical amplification.

Such an optical component may have a light absorbing upper waveguide core layer and may have a low absorption, optically passive, lower slab waveguide core layer.

A bulk semiconductor layer may be used as the lower slab waveguide core layer.

A multiple quantum well structure may provide the lower slab waveguide core layer.

Such an optical component may have two ridge waveguides that are normal to each other, or that are not normal to each other.

The deflecting surface may be flat, or cylindrical.

Another embodiment of the present invention can provide a self aligning method of fabricating such an optical device and comprises:
Deposition and a first patterning step of a first mask material on the wafer;
Deposition and patterning of a second mask material, that is aligned properly to the first mask material on the wafer;
A second patterning step of the first mask material using the second mask material as a mask.
A first etching step of the component wafer material;
Removal of the second mask material;
A second etching step of the component wafer material;
Another embodiment of the present invention provides a method of wavelength conversion in such an optical component and/or integrated device where a data carrying light signal and a CW light signal enter the component/integrated device via a same port.

Another embodiment of the present invention provides a method of wavelength conversion in such an optical component and/or integrated device where a data carrying light signal enters the component/integrated device via a first port and leaves the component/integrated device via a second port, while a CW light signal enters the same component/integrated device via the second port and leaves the same component/integrated device via the first port.

Another method of wavelength conversion can be provided in such an optical component and/or integrated device where a data carrying light signal and a CW light signal enter the component/integrated device via separate respective ports.

Another method of wavelength conversion can be provided in such an optical component and/or integrated device where a data carrying light beam and a CW light beam interact in the optical component and/or integrated device to generated light beams of another wavelength that are modulated in intensity by the data carried by the first light beam.

The examples of the invention have been described using ridge waveguide structures. However, it will be readily appreciated that any waveguide structure is appropriate for use in embodiments of the invention.

## Claims

1. A semiconductor optical device formed on a substrate (500) comprising:
a first waveguide which extends in a first direction;
a second waveguide which extends in a second direction different to the first direction such that the first and second waveguides form an intersection, wherein the first and second waveguides include a lower waveguide layer (502) and an upper waveguide layer (504);
a first vertical optical coupler portion (205a) which extends partially along the first waveguide;
a second vertical optical coupler portion (205b) which extends partially along the second waveguide and which forms an intersection with the first vertical optical coupler portion; and
a reflecting surface (206) at the intersection for reflecting optical signals between the first and second vertical optical coupler portions (205a, 205b), and **characterised by** a first ohmic contact (506) on the first and second vertical coupler portions;
a second ohmic contact (507) on a side of the substrate opposite the coupler portions,
wherein the upper waveguide layer (504) is optically active and the first and second vertical optical coupler portions (205a, 205b) are operable to be optically coupled with the first and second waveguides respectively upon application of a predetermined control signal to the coupler portions, such that the device is operable to route an optical signal between the first and second waveguides.

2. A device as claimed in claim 1, wherein the first and second vertical optical coupler portions are light amplifying structures having controllable optical amplifying levels.

3. A device as claimed in claim 2, wherein the first and second vertical optical coupler portions are provided by a bulk semiconductor layer, which has an optical amplification level controlled by electrical current injection.

4. A device as claimed in claim 2, wherein the first and second vertical optical coupler portions are provided by quantum well structures, which have optical amplification levels controlled by electrical current injection.

5. A device as claimed in claim 1, wherein the first and second vertical optical coupler portions are absorbing structures which have controllable absorption levels.

6. A device as claimed in claim 5, wherein the absorption levels of the first and second vertical optical coupler portions are controlled by electrical voltage.

7. A device as claimed in any one of the preceding claims, wherein the first and second waveguides are substantially normal to one another.

8. A device as claimed in any one of the preceding claims, wherein the reflecting surface at the intersection is substantially planar.

9. A device as claimed in any one of claims 1 to 7, wherein the reflecting surface at the intersection is substantially cylindrical.

10. An optical component comprising a plurality of devices as claimed in any one of the preceding claims.

11. A method for modulating an optical signal using a semiconductor optical device formed on a substrate (500) which comprises a first waveguide which extends in a first direction, a second waveguide which extends in a second direction different to the first direction such that the first and second waveguides form an intersection, wherein the first and second waveguides include a lower waveguide layer (502) and an upper waveguide layer (504), a first vertical optical coupler portion (205a) which extends partially along the first waveguide, and a second vertical optical coupler portion (205b) which extends partially along the second waveguide and which forms a intersection with the first vertical optical coupler portion, a reflecting surface (206) at the intersection for reflecting optical signals between the first and second vertical optical coupler portions (205a, 205b), and **characterised by** a first ohmic contact (506) on the first and second vertical coupler portions, a second ohmic contact (507) on a side of the substrate opposite the coupler portions, wherein the upper waveguide layer (504) is optically active and the first and second vertical optical coupler portions (205a, 205b) are operable to be optically coupled with the first and second waveguides respectively upon application of a predetermined control signal to the coupler portions, such that the device is operable to route an optical signal between the first and second waveguides, the method comprising:
applying a predetermined control signal to the vertical optical coupler portions of the optical device;
inputting a first optical signal (701, 801, 901, 1001) to the first waveguide, the first optical signal being modulated by a data signal; and
inputting a second optical signal (702, 802, 902, 1002) to one of the first and second waveguides, which second optical signal is unmodulated;
the second optical signal being modulated by the data signal carried by the first optical signal and being output from the other of the first and second waveguides.

12. A method for combining first and second optical signals to produce a third optical signal using a semiconductor optical device formed on a substate (500) which comprises a first waveguide which extends in a first direction, a second waveguide which extends in a second direction different to the first direction such that the first and second waveguides form an intersection, wherein the first and second waveguides include a lower waveguide layer (502) and an upper waveguide layer (504), a first vertical optical coupler portion (205a) which extends partially along the first waveguide, and a second vertical optical coupler portion (205b) which extends partially along the second waveguide, and which forms an intersection with the first vertical optical coupler portion, a reflecting surface (206) at the intersection for reflecting optical signals between the first and second vertical optical coupler portions (205a, 205b), and **characterised by** a first ohmic contact (506) on the first and second vertical coupler portions, a second ohmic contact (507) on a side of the substrate opposite the coupler portions, wherein the upper waveguide layer (504) is optically active and the first and second vertical optical coupler portions (205a, 205b) are operable to be optically coupled with the first and second waveguides respectively upon application of a predetermined control signal to the coupler portions, such that the device is operable to route an optical signal between the first and second waveguides, the method comprising:
applying a predetermined control signal to the vertical optical coupler portions of the optical device;
inputting a first optical signal to the first waveguide;
inputting a second optical signal to one of the first and second waveguides; and
outputting a third optical signal from the optical device, the third optical signal being modulated by any data carried by either or both of the first and second optical signals.

13. A method as claimed in claim 11 or 12, wherein the predetermined control signal causes injection of electrical current into the first and second vertical optical coupler portions.

14. A method of fabricating a semiconductor optical device, the method comprising:
forming a first slab waveguide structure on a substrate (500);
forming a second slab waveguide structure on the first slab waveguide structure; the substrate, first and second waveguide structures forming a wafer structure (201); and
**characterised by**
depositing a first mask material (305) on the wafer structure;
patterning the first mask material to leave a patterned first mask and exposed wafer structure;
depositing a second mask material (306) onto the patterned first mask and exposed wafer structure;
patterning the second mask material (306) to leave a patterned second mask, exposed first mask and exposed wafer structure;
etching areas of the first mask material not covered by the second mask material;
etching the exposed wafer structure to a first predetermined depth;
removing the second mask layer;
etching the wafer structure (201) not covered by the first mask layer to a second predetermined depth; and
removing the second mask material (306),
wherein the second mask material serves to define first and second waveguides which extend in first and second directions respectively, such that the first and second waveguides form an intersection, wherein the first and second waveguides include a lower waveguide layer (502) and an upper waveguide layer (504) wherein the upper waveguide layer (504) is formed of an optically active material, and the first mask layer (305) serves to define first and second vertical optical coupler portions which extend partially along the first and second waveguides respectively, the second etching step defining the vertical optical coupler portions (205) and a reflective surface (206) at the intersection between the first and the second optical coupler portions, (205a, 205b), depositing metal layers on the first and second vertical coupler portions to form a first ohmic contact (506), and depositing metal layers on a side of the substrate opposite the coupler portions to form a second ohmic contact (507), the vertical optical coupler portions being operable to be optically coupled with the first and second waveguides respectively upon application of a predetermined control signal to the coupler portions (205).

## Patentansprüche

1. Halbleiter-Optikbauelement, das auf einem Substrat (500) vorgesehen ist, und aufweist:
einen ersten Wellenleiter, der sich in einer ersten Richtung erstreckt;
einen zweiten Wellenleiter, der sich in einer zweiten, von der ersten Richtung verschiedenen Richtung erstreckt, so dass der erste und der zweite Wellenleiter eine Kreuzungsstelle bilden, wobei der erste und der zweite Wellenleiter eine untere Wellenleiterschicht (502) und eine obere Wellenleiterschicht (504) aufweisen;
einen ersten, vertikalen Optokopplerabschnitt (205a), der sich zum Teil entlang dem ersten Wellenleiter erstreckt;
einen zweiten, vertikalen Optokopplerabschnitt (205b), der sich teilweise entlang dem zweiten Wellenleiter erstreckt, und der eine Kreuzungsstelle mit dem ersten, vertikalen Optokopplerabschnitt bildet; und
eine reflektierende Oberfläche (206) an der Kreuzungsstelle zum Reflektieren optischer Signale zwischen dem ersten und dem zweiten vertikalen Optokopplerabschnitt (205a, 205b), und **gekennzeichnet durch** eine erste, leitende Verbindung (506) auf dem ersten und dem zweiten vertikalen Kopplerabschnitt;
eine zweite, leitende Verbindung (507) an einer Seite des Substrats entgegengesetzt zu den Kopplerabschnitten,
wobei die obere Wellenleiterschicht (504) optisch aktiv ist, und der erste und der zweite, vertikale Optokopplerabschnitt (205a, 205b) so betrieben werden können, dass sie optisch mit dem ersten bzw. zweiten Wellenleiter gekoppelt sind, nach Anlegen eines vorbestimmten Steuersignals an die Kopplerabschnitte, so dass das Bauelement so betreibbar ist, dass es ein optisches Signal zwischen dem ersten und dem zweiten Wellenleiter umleitet.

2. Bauelement nach Anspruch 1, bei welchem der erste und der zweite vertikale Optokopplerabschnitt Lichtverstärkungsanordnungen sind, welche steuerbare optische Verstärkungspegel aufweisen.

3. Bauelement nach Anspruch 2, bei welchem der erste und der zweite, vertikale Optokopplerabschnitt durch eine Halbleitergrundschicht zur Verfügung gestellt werden, die einen optischen Verstärkungspegel aufweist, der durch Injektion elektrischen Stroms gesteuert wird.

4. Bauelement nach Anspruch 2, bei welchem der erste und der zweite, vertikale Optokopplerabschnitt durch Quantentopfanordnungen zur Verfügung gestellt werden, welche optische Verstärkungspegel aufweisen, die durch Injektion eines elektrischen Stroms gesteuert werden.

5. Bauelement nach Anspruch 1, bei welchem der erste und der zweite, vertikale Optokopplerabschnitt Absorptionsanordnungen sind, welche steuerbare Absorptionspegel aufweisen.

6. Bauelement nach Anspruch 5, bei welchem die Absorptionspegel des ersten und des zweiten, vertikalen Optokopplerabschnitts durch eine elektrische Spannung gesteuert werden.

7. Bauelement nach einem der voranstehenden Ansprüche, bei welchem der erste und der zweite Wellenleiter im Wesentlichen normal zueinander angeordnet sind.

8. Bauelement nach einem der voranstehenden Ansprüche, bei welchem die reflektierende Oberfläche an der Kreuzungsstelle im Wesentlichen eben ist.

9. Bauelement nach einem der Ansprüche 1 bis 7, bei welchem die reflektierende Oberfläche an der Kreuzungsstelle im Wesentlichen zylinderförmig ist.

10. Optisches Bauteil, das mehrere Bauelemente nach einem der voranstehenden Patentansprüche aufweist.

11. Verfahren zum Modulieren eines optischen Signals unter Verwendung eines Halbleiter-Optikbauelements, das auf einem Substrat (500) vorgesehen ist, einen ersten Wellenleiter aufweist, der sich in einer ersten Richtung erstreckt, einen zweiten Wellenleiter, der sich in einer zweiten, von der ersten Richtung verschiedenen Richtung erstreckt, so dass der erste und der zweite Wellenleiter eine Kreuzungsstelle bilden, wobei der erste und der zweite Wellenleiter eine untere Wellenleiterschicht (502) und eine obere Wellenleiterschicht (504) aufweisen, einen ersten, vertikalen Optokopplerabschnitt (205a), der sich zum Teil entlang dem ersten Wellenleiter erstreckt, und einen zweiten, vertikalen Optokopplerabschnitt (205b), der sich teilweise entlang dem zweiten Wellenleiter erstreckt, und eine Kreuzungsstelle mit dem ersten, vertikalen Optokopplerabschnitt bildet, eine reflektierende Oberfläche (206) an der Kreuzungsstelle zum Reflektieren optischer Signale zwischen dem ersten und dem zweiten, vertikalen Optokopplerabschnitt (205a, 205b), und **gekennzeichnet durch** eine erste, leitende Verbindung (506) auf dem ersten und dem zweiten, vertikalen Kopplerabschnitt, eine zweite, leitende Verbindung (507) an einer Seite des Substrats entgegengesetzt zu den Kopplerabschnitten, wobei die obere Wellenleiterschicht (504) optisch aktiv ist, und der erste und der zweite vertikale Optokopplerabschnitt (205a, 205b) so betreibbar sind, dass sie optisch mit dem ersten bzw. zweiten Wellenleiter nach Anlegen eines vorbestimmten Steuersignals an die Kopplerabschnitte gekoppelt sind, so dass das Bauelement so betreibbar ist, dass es ein optisches Signal zwischen dem ersten und dem zweiten Wellenleiter umleitet, wobei das Verfahren umfasst:
Anlegen eines vorbestimmten Steuersignals an die vertikalen Optokopplerabschnitte des Optikbauelements;
Eingabe eines ersten, optischen Signals (701, 801, 901, 1001) in den ersten Wellenleiter, wobei das erste optische Signal **durch** ein Datensignal moduliert wird; und
Eingabe eines zweiten optischen Signals (702, 802, 902, 1002) in entweder den ersten oder den zweiten Wellenleiter, wobei das zweite optische Signal unmoduliert ist;
und das zweite optische Signal **durch** das von dem ersten optischen Signal transportierte Datensignal moduliert wird, und von dem anderen unter dem ersten und zweiten Wellenleiter ausgegeben wird.

12. Verfahren zum Modulieren eines optischen Signals unter Verwendung eines Halbleiter-Optikbauelements, das auf einem Substrat (500) vorgesehen ist, einen ersten Wellenleiter aufweist, der sich in einer ersten Richtung erstreckt, einen zweiten Wellenleiter, der sich in einer zweiten, von der ersten Richtung verschiedenen Richtung erstreckt, so dass der erste und der zweite Wellenleiter eine Kreuzungsstelle bilden, wobei der erste und der zweite Wellenleiter eine untere Wellenleiterschicht (502) und eine obere Wellenleiterschicht (504) aufweisen, einen ersten, vertikalen Optokopplerabschnitt (205a), der sich zum Teil entlang dem ersten Wellenleiter erstreckt, und einen zweiten, vertikalen Optokopplerabschnitt (205b), der sich teilweise entlang dem zweiten Wellenleiter erstreckt, und eine Kreuzungsstelle mit dem ersten, vertikalen Optokopplerabschnitt bildet, eine reflektierende Oberfläche (206) an der Kreuzungsstelle zum Reflektieren optischer Signale zwischen dem ersten und dem zweiten, vertikalen Optokopplerabschnitt (205a, 205b), und **gekennzeichnet durch** eine erste, leitende Verbindung (506) auf dem ersten und dem zweiten, vertikalen Kopplerabschnitt, eine zweite, leitende Verbindung (507) an einer Seite des Substrats entgegengesetzt zu den Kopplerabschnitten, wobei die obere Wellenleiterschicht (504) optisch aktiv ist, und der erste und der zweite vertikale Optokopplerabschnitt (205a, 205b) so betreibbar sind, dass sie optisch mit dem ersten bzw. zweiten Wellenleiter nach Anlegen eines vorbestimmten Steuersignals an die Kopplerabschnitte gekoppelt sind, so dass das Bauelement so betreibbar ist, dass es ein optisches Signal zwischen dem ersten und dem zweiten Wellenleiter umleitet, wobei das Verfahren umfasst:
Anlegen eines vorbestimmten Steuersignals an die vertikalen Optokopplerabschnitte des Optikbauelements;
Eingabe eines ersten, optischen Signals in den ersten Wellenleiter;
Eingabe eines zweiten, optischen Signals entweder in den ersten oder den zweiten Wellenleiter; und
Ausgeben eines dritten optischen Signals von dem Optikbauelement, wobei das dritte optische Signal **durch** jegliche Daten moduliert wird, die **durch** entweder das erste oder zweite optische Signal, oder **durch** sowohl das erste als auch zweite optische Signal, befördert werden.

13. Verfahren nach Anspruch 11 oder 12, bei welchem das vorbestimmte Steuersignal eine Injektion eines elektrischen Stroms in dem ersten und dem zweiten, vertikalen Optokopplerabschnitt hervorruft.

14. Verfahren zur Herstellung eines Halbleiter-Optikbauelements, welches umfasst:
Ausbildung einer ersten Slab-Wellenleiteranordnung auf einem Substrat (500);
Ausbildung einer zweiten Slab-Wellenleiteranordnung auf der ersten Slab-Wellenleiteranordnung; wobei das Substrat, und die erste sowie die zweite Wellenleiteranordnung eine Waferanordnung (201) bilden; und **gekennzeichnet durch**
Ablagerung eines ersten Maskenmaterials (305) auf der Waferanordnung;
Versehen des ersten Maskenmaterials mit einem Muster, damit eine gemusterte Anordnung mit einer ersten Maske und einem freiliegenden Wafer verbleibt;
Ablagern eines zweiten Maskenmaterials (306) auf der gemusterten Anordnung aus der ersten Maske und dem freiliegenden Wafer;
Versehen des zweiten Maskenmaterials (306) mit einem Muster, damit eine gemusterte Anordnung aus der zweiten Maske, der freiliegenden ersten Maske, und dem freiliegenden Wafer verbleibt;
Ätzen von Bereichen des ersten Maskenmaterials, die nicht **durch** das zweite Maskenmaterial abgedeckt sind;
Ätzen der freiliegenden Waferanordnung bis auf eine erste, vorbestimmte Tiefe;
Entfernen der zweiten Maskenschicht;
Ätzen der Waferanordnung (201), die nicht **durch** die erste Maskenschicht abgedeckt ist, bis auf eine zweite, vorbestimmte Tiefe; und
Entfernen des zweiten Maskenmaterials (306);
wobei das zweite Maskenmaterial dazu dient, einen ersten und einen zweiten Wellenleiter festzulegen, die sich in einer ersten bzw. zweiten Richtung erstrecken, so dass der erste und der zweite Wellenleiter eine Kreuzungsstelle bilden, wobei der erste und der zweite Wellenleiter eine untere Wellenleiterschicht (502) und eine obere Wellenleiterschicht (504) aufweisen, wobei die obere Wellenleiterschicht (504) aus einem optisch aktiven Material besteht, und die erste Maskenschicht (305) dazu dient, einen ersten und einen zweiten, vertikalen Optokopplerabschnitt festzulegen, die sich teilweise entlang dem ersten bzw. zweiten Wellenleiter erstrecken, wobei der zweite Ätzschritt die vertikalen Optokopplerabschnitte (205) und eine reflektierende Oberfläche (206) an der Kreuzungsstelle zwischen dem ersten und dem zweiten Optokopplerabschnitt (205a, 205b) festlegt, Ablagern von Metallschichten auf dem ersten und dem zweiten, vertikalen Kopplerabschnitt zur Ausbildung einer ersten, leitenden Verbindung (506), und Ablagern von Metallschichten auf einer Seite des Substrats entgegengesetzt zu den Kopplerabschnitten zur Ausbildung einer zweiten, leitenden Verbindung (506), wobei die vertikalen Optokopplerabschnitte so betreibbar sind, dass sie optisch mit dem ersten bzw. zweiten Wellenleiter gekoppelt sind, beim Anlegen eines vorbestimmten Steuersignals an die Kopplerabschnitte (205).

## Revendications

1. Dispositif optique à semiconducteur qui est formé sur un substrat (500), comprenant :
un premier guide d'ondes qui s'étend suivant une première direction ;
un second guide d'ondes qui s'étend suivant une seconde direction qui est différente de la première direction de telle sorte que les premier et second guides d'ondes forment une intersection, et dans lequel les premier et second guides d'ondes incluent une couche de guide d'ondes inférieure (502) et une couche de guide d'ondes supérieure (504) ;
une première partie de coupleur optique verticale (205a) qui s'étend partiellement le long du premier guide d'ondes ;
une seconde partie de coupleur optique verticale (205b) qui s'étend partiellement le long du second guide d'ondes et qui forme une intersection avec la première partie de coupleur optique verticale ; et
une surface réfléchissante (206) au niveau de l'intersection pour réfléchir les signaux optiques entre les première et seconde parties de coupleur optique verticales (205a, 205b), et **caractérisé par** un premier contact ohmique (506) sur les première et seconde parties de coupleur optique verticales ;
un second contact ohmique (507) sur le côté du substrat opposé aux parties de coupleur,
dans lequel la couche de guide d'ondes supérieure (504) est active optiquement et les première et seconde parties de coupleur optique verticales (205a, 205b) peuvent fonctionner de manière à être couplées optiquement avec les premier et second guides d'ondes, de façon respective, suite à l'application d'un signal de commande prédéterminé sur les parties de coupleur de telle sorte que le dispositif puisse fonctionner pour router un signal optique entre les premier et second guides d'ondes.

2. Dispositif selon la revendication 1, dans lequel les première et seconde parties de coupleur optique verticales sont des structures d'amplification de lumière présentant des niveaux d'amplification optique contrôlables.

3. Dispositif selon la revendication 2, dans lequel les première et seconde parties de coupleur optique verticales sont constituées au moyen d'une couche semiconductrice dans la masse qui présente un niveau d'amplification optique qui est contrôlé au moyen d'une injection de courant électrique.

4. Dispositif selon la revendication 2, dans lequel les première et seconde parties de coupleur optique verticales sont constituées par des structures de puits quantique qui présentent des niveaux d'amplification optique qui sont contrôlés au moyen d'une injection de courant électrique.

5. Dispositif selon la revendication 1, dans lequel les première et seconde parties de coupleur optique verticales sont des structures absorbeuses qui présentent des niveaux d'absorption contrôlables.

6. Dispositif selon la revendication 5, dans lequel les niveaux d'absorption des première et seconde parties de coupleur optique verticales sont contrôlés au moyen d'une tension électrique.

7. Dispositif selon l'une quelconque des revendications précédentes, dans lequel les premier et second guides d'ondes sont sensiblement normaux l'un à l'autre.

8. Dispositif selon l'une quelconque des revendications précédentes, dans lequel la surface réfléchissante au niveau de l'intersection est sensiblement plane.

9. Dispositif selon l'une quelconque des revendications 1 à 7, dans lequel la surface réfléchissante au niveau de l'intersection est sensiblement cylindrique.

10. Composant optique comprenant une pluralité de dispositifs selon l'une quelconque des revendications précédentes.

11. Procédé pour moduler un signal optique en utilisant un dispositif optique à semiconducteur qui est formé sur un substrat (500), qui comprend un premier guide d'ondes qui s'étend suivant une première direction ; un second guide d'ondes qui s'étend suivant une seconde direction qui est différente de la première direction de telle sorte que les premier et second guides d'ondes forment une intersection, et dans lequel les premier et second guides d'ondes incluent une couche de guide d'ondes inférieure (502) et une couche de guide d'ondes supérieure (504) ; une première partie de coupleur optique verticale (205a) qui s'étend partiellement le long du premier guide d'ondes ; et une seconde partie de coupleur optique verticale (205b) qui s'étend partiellement le long du second guide d'ondes et qui forme une intersection avec la première partie de coupleur optique verticale ; une surface réfléchissante (206) au niveau de l'intersection pour réfléchir les signaux optiques entre les première et seconde parties de coupleur optique verticales (205a, 205b), et **caractérisé par** un premier contact ohmique (506) sur les première et seconde parties de coupleur verticales ; un second contact ohmique (507) sur le côté du substrat opposé aux parties de coupleur, dans lequel la couche de guide d'ondes supérieure (504) est active optiquement et les première et seconde parties de coupleur optique verticales (205a, 205b) peuvent fonctionner de manière à être couplées optiquement avec les premier et second guides d'ondes, de façon respective, suite à l'application d'un signal de commande prédéterminé sur les parties de coupleur de telle sorte que le dispositif puisse fonctionner pour router un signal optique entre les premier et second guides d'ondes, le procédé comprenant :
l'application d'un signal de commande prédéterminé sur les parties de coupleur optique verticales du dispositif optique ;
l'entrée d'un premier signal optique (701, 801, 901, 1001) sur le premier guide d'ondes, le premier signal optique étant modulé au moyen d'un signal de données ; et
l'entrée d'un second signal optique (702, 802, 902, 1002) sur l'un des premier et second guides d'ondes, lequel second signal optique est non modulé,
ledit second signal optique étant modulé au moyen du signal de données qui est transporté par le premier signal optique et étant émis en sortie depuis l'autre des premier et second guides d'ondes.

12. Procédé pour combiner des premier et second signaux optiques afin de produire un troisième signal optique en utilisant un dispositif optique à semiconducteur qui est formé sur un substrat (500), qui comprend un premier guide d'ondes qui s'étend suivant une première direction ; un second guide d'ondes qui s'étend suivant une seconde direction qui est différente de la première direction de telle sorte que les premier et second guides d'ondes forment une intersection, et dans lequel les premier et second guides d'ondes incluent une couche de guide d'ondes inférieure (502) et une couche de guide d'ondes supérieure (504) ; une première partie de coupleur optique verticale (205a) qui s'étend partiellement le long du premier guide d'ondes ; une seconde partie de coupleur optique verticale (205b) qui s'étend partiellement le long du second guide d'ondes et qui forme une intersection avec la première partie de coupleur optique verticale ; une surface réfléchissante (206) au niveau de l'intersection pour réfléchir les signaux optiques entre les première et seconde parties de coupleur optique verticales (205a, 205b), et **caractérisé par** un premier contact ohmique (506) sur les première et seconde parties de coupleur optique verticales ; un second contact ohmique (507) sur le côté du substrat opposé aux parties de coupleur, dans lequel la couche de guide d'ondes supérieure (504) est active optiquement et les première et seconde parties de coupleur optique verticales (205a, 205b) peuvent fonctionner de manière à être couplées optiquement avec les premier et second guides d'ondes, de façon respective, suite à l'application d'un signal de commande prédéterminé sur les parties de coupleur de telle sorte que le dispositif puisse fonctionner pour router un signal optique entre les premier et second guides d'ondes, le procédé comprenant :
l'application d'un signal de commande prédéterminé sur les parties de coupleur optique verticales du dispositif optique ;
l'entrée d'un premier signal optique sur le premier guide d'ondes ;
l'entrée d'un second signal optique sur l'un des premier et second guides d'ondes ; et
l'émission en sortie d'un troisième signal optique depuis le dispositif optique, le troisième signal optique étant modulé par de quelconques données qui sont transportées par l'un quelconque ou les deux des premier et second signaux optiques.

13. Procédé selon la revendication 11 ou 12, dans lequel le signal de commande prédéterminé génère une injection de courant électrique dans les première et seconde parties de coupleur optique verticales.

14. Procédé de fabrication d'un dispositif optique à semiconducteur, le procédé comprenant :
la formation d'une première structure de guide d'ondes en dalle sur un substrat (500) ;
la formation d'une seconde structure de guide d'ondes en dalle sur la première structure de guide d'ondes en dalle ;
le substrat, les première et seconde structures de guide d'ondes formant une structure de plaquette (201) ; et **caractérisé par**
le dépôt d'un premier matériau de masque (305) sur la structure de plaquette ;
la conformation du premier matériau de masque pour laisser un premier masque conformé et une structure de plaquette exposée ;
le dépôt d'un second matériau de masque (306) sur le premier masque conformé et sur la structure de plaquette exposée ;
la conformation du second matériau de masque (306) de manière à laisser un second masque conformé, un premier masque exposé et une structure de plaquette exposée ;
la gravure de zones du premier matériau de masque non recouvertes par le second matériau de masque ;
la gravure de la structure de plaquette exposée à une première profondeur prédéterminée ;
l'enlèvement de la seconde couche de masque ;
la gravure de la structure de plaquette (201) non recouverte par la première couche de masque jusqu'à une seconde profondeur prédéterminée ; et
l'enlèvement du second matériau de masque (306),
dans lequel le second matériau de masque sert à définir les premier et second guides d'ondes qui s'étendent respectivement suivant les première et seconde directions de telle sorte que les premier et second guides d'ondes forment une intersection, dans lequel les premier et second guides d'ondes incluent une couche de guide d'ondes inférieure (502) et une couche de guide d'ondes supérieure (504), dans lequel la couche de guide d'ondes supérieure (504) est formée en un matériau actif optiquement et la première couche de masque (305) sert à définir des première et seconde parties de coupleur optique verticales qui s'étendent partiellement le long des premier et second guides d'ondes, de façon respective, la seconde étape de gravure définissant les parties de coupleur optique verticales (205) et une surface réfléchissante (206) au niveau de l'intersection entre les première et seconde parties de coupleur optique (205a, 205b), en déposant des couches métalliques sur les première et seconde parties de coupleur verticales afin de former un premier contact ohmique (506) et en déposant des couches métalliques sur un côté du substrat opposé aux parties de coupleur afin de former un second contact ohmique (507), les parties de coupleur optique verticales pouvant fonctionner pour être couplées optiquement avec les premier et second guides d'ondes, de façon respective, suite à l'application d'un signal de commande prédéterminé sur les parties de coupleur (205).
